# EUROPEAN PATENT APPLICATION

(11) **EP 2 846 328 A1**
(43) Date of publication of application: **11.03.2015**
(21) Application number: 13306219.0
(22) Date of filing: 05.09.2013
(51) Int. Cl.: G10L 25/51

(54) **Method and apparatus of detection of events**

(71) Applicant: Thomson Licensing, 92130 Issy-les-Moulineaux (FR)
(72) Inventor: Fontaine, Patrick, 35576 CESSON SEVIGNE (FR); Laurent, Anthony, 35576 CESSON SEVIGNE (FR); Gilberton, Philippe, 35576 CESSON SEVIGNE (FR)
(74) Representative: Huchet, Anne

(57) **Abstract**

Method of detection of an event in an environment, comprising the steps of:
a) recording (44) at least one sound in said environment ;
b) generating (46, 48, 50) a combination of at least two features from said at least one recorded sound ;
c) comparing (52, 54, 56) said generated combination with at least one stored combination within a database ; and
d) detecting (60) an event on the basis of the comparison result.

## Description

### FIELD OF THE INVENTION

The present invention generally relates to the field of home automation.

More particularly, the invention deals with the detection of events in the context of a smart home system. The detection of such events may be used for triggering corresponding actions within the smart home system.

Thus, the invention concerns a method of detection of an event. It also concerns a corresponding detection apparatus and a computer program implementing the detection method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Nowadays, many smart home systems exist in the market for home automation. Typical systems include a controller in the form of a "box" that is responsible of getting status or other information from sensors, like a temperature sensor or a video camera indicating a presence detection, and for controlling other devices, like switching on/off a power plug or a lamp.

The sensors and the actuators of the existing systems communicate with the controller through PAN (Personal Area Network)/WPAN (Wireless Personal Area Network) protocols.

The WPAN protocols include protocols like ZigBee and IPv6 LoW Power wireless Area Networks, called 6LoWPAN, ZWave, EnOcean, KNX and X3D from Delta Dore, among them some protocols are standardized.

The wired protocols include protocols like X10 (or X2D from Delta Dore) that uses power line wiring for signal and control and Universal Plug and Play (UPnP) that uses Ethernet wiring for communication.

The existing smart home controllers generally support one or several of these protocols but not all the protocols while the existing sensors and actuators work with different protocols that are not interoperable. Therefore, with the present systems, consumers cannot add any sensor to an existing smart home system. Besides, they cannot reuse sensors when they change their smart home system provider, as they are stuck with a proprietary protocol and cannot add sensors from another system.

Moreover, a smart home system cannot interact with existing "things" that are not connected. For example, when a traditional, i.e. not connected, door bell rings, it does not trigger any action in the smart home system.

Thus, it is necessary to add a specific sensor for each event within the home that the user wishes to detect, for example, for detecting that a person enters a room, a motion detector needs to be connected to the smart home system.

### SUMMARY OF THE INVENTION

The present invention proposes a solution for improving the situation.

Accordingly, the present invention provides a method of detection of an event in an environment, comprising the steps of :
a) recording at least one sound in said environment ;
b) generating a combination of at least two features from said at least one recorded sound ;
c) comparing said generated combination with at least one stored combination within a database ; and
d) detecting an event on the basis of the comparison result.

Thus, the present invention provides a cheap and easy to implement solution for detecting events in a given environment, such as a home. The solution of the invention is based only on a capture and processing of sounds within the environment, making the invention method independent from any proprietary protocol.

Remarkably, the use of a combination of at least two features of recorded sounds renders the detection more accurate and permits the detection of complex events.

According to a first embodiment, only one sound is recorded and the combination comprises a signature of said recorded sound and at least one feature chosen from the rhythm or the volume of the recorded sound.

According to a second embodiment, at least two sounds are recorded and the combination comprises signatures of said recorded sounds.

Advantageously, the detected event is used to trigger an action.

The invention also provides an apparatus of detection of an event in an environment, comprising:
a) a generation module for generating a combination of at least two features from said at least one sound ;
b) a comparison module for comparing said generated combination with at least one stored combination within a database ; and
c) a detection module for detecting an event on the basis of the comparison result.

According to an embodiment, the apparatus is a smartphone.

According to another embodiment, the apparatus is a set-top box or a gateway.

The invention also provides a system comprising at least one apparatus of detection according to the invention and a controller connected to said apparatus, said controller being adapted for triggering an action on the basis of the detected event.

According to an embodiment, the apparatus of detection and the controller are integrated in a same device.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

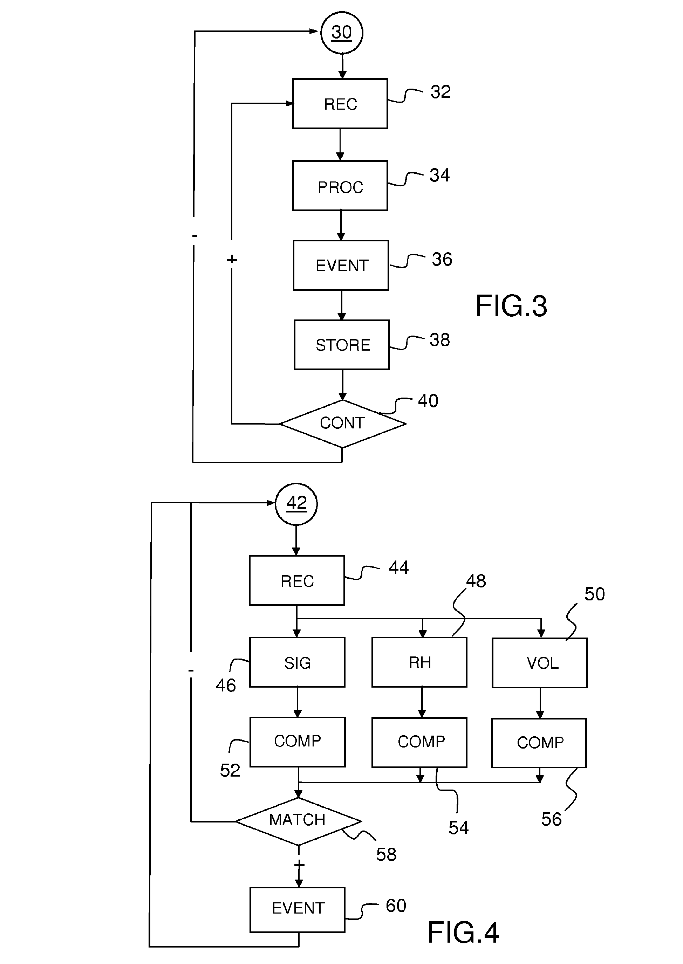

The invention thus provides a computer-readable program comprising computer-executable instructions to enable a computer to perform the detection method of the invention. The diagrams of figures 3, 4 and 5 illustrate examples of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a smart home system, according to an embodiment of the present invention ;
- Figure 2 is a block diagram representing the structure of a detection apparatus, according to an embodiment of the present invention ;
- Figure 3 is a flowchart detailing the steps for building the database of the system of Figure 1 according to an embodiment of the present invention;
- Figure 4 is a flowchart detailing the steps of the detection method of the invention, according to an embodiment;
- Figure 5 is a flowchart detailing the use of a detected event to trigger an action, according to an embodiment of the present invention; and
- Figure 6 illustrates alternative embodiments of the invention.

### DETAILED DESCRIPTION OF PREFERRED EMBODIMENTS

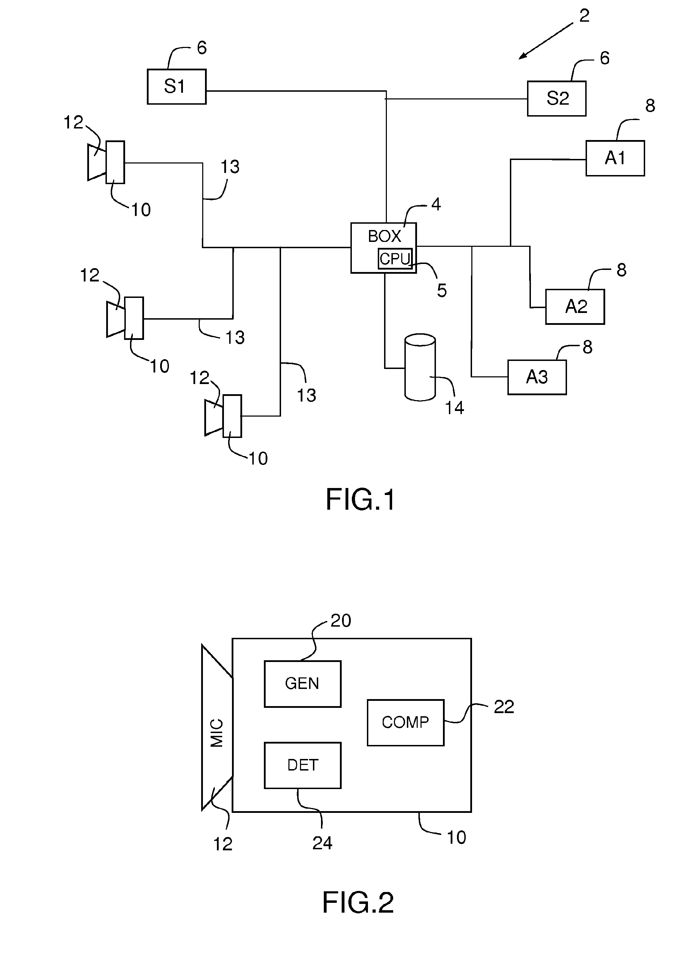

Referring to Figure 1, there is shown therein a schematic view of a smart home system 2 implementing the method of the present invention.

The smart home system 2 is implemented within an environment, such as a home, a firm building, a hospital, a school or any other commodity for which the use of such system may be useful.

The smart home system 2 comprises a controller 4, implemented for example in a central box, such as a set-top box or a gateway. Said controller 4 comprises a processor 5 able to process signals coming from sensors and to trigger actions on the basis of the processed signals.

The smart home system 2 further comprises a plurality of sensors 6 and a plurality of actuators 8. The sensors 6 and the actuators 8 are connected to the controller 4 and communicate with said controller 4 through a PAN/WPAN protocol, such as Zigbee, 6LoWPAN, KNX, etc.

Besides, the smart home system 2 comprises a plurality of apparatuses 10 of detection of events according to the present invention. Each detection apparatus 10 is equipped with a microphone 12 for capturing and recording sounds in the environment.

For instance, the detection apparatuses 10 comprise smartphones, for instance the smartphones of people living in the environment, called for example Alice and Bob.

The detection apparatuses 10 are connected to the controller 4, for example through wireless links 13.

Furthermore, the smart home system 2 comprises a storage module 14 connected to the controller 4, used for storing a database of combinations of sound features associated to a plurality of events that may occur within the environment. These sound features include sound signatures in the form of audio fingerprints and other acoustic features such as the volume, the rhythm, the fading.

The storage module 14 can be localized in a memory of the controller 4 or may be a distant server.

The block diagram of Figure 2 details the structure of a detection apparatus 10 according to an embodiment of the invention.

The detection apparatus 10 comprises a generation module 20 for generating a combination of at least two features from one or a plurality of sounds recorded by the microphone 12.

The detection apparatus 10 further comprises a comparison module 22 for comparing said generated combination with at least one stored combination within the database.

Besides, the detection apparatus 10 comprises a detection module 24 for detecting an event on the basis of the comparison result.

The generation module 20, the comparison module 22 and the detection module 24 are advantageously implemented as an application within the detection apparatus 10, which is for instance a smartphone.

Alternatively, the detection apparatus 10 may be integrated in the central box and the generation module 20, the comparison module 22 and the detection module 24 may be implemented by the processor 5.

The flowchart of Figure 3 details the steps for building the database of audio features associated with events, according to an embodiment of the invention.

Firstly, the system 2 is in an idle state 30.

At a first step 32, a new sound is recorded, preferably in the form of two audio samples captured during two succeeding periods of time, by a microphone 12 associated to a detection apparatus 10.

Alternatively, only one audio sample is recorded. The audio sample may be divided in chunks in order to get a plurality of chunks.

At step 34, the generation module 20 of the detection apparatus 10 computes the acoustic signature of the recorded sound. Preferably, the computed acoustic signature is an audio fingerprint, i.e. a condensed digital summary, deterministically generated from the audio samples (or chunks).

Furthermore, the generation module 20 extracts the rhythm of the sound on the basis of the recorded audio samples. For instance, the extracted rhythm may take one of these values : very fast, fast, medium, slow, very slow.

Alternatively, the generation module 20 can extract a more complex rhythm of the sound that can match a sequence of sounds and silences. For example, when the timer of the oven expires, the oven alarm can match a sequence of "1 0 1 0 1 0 1 0 1 0 0 0 0 0", where 1 represents a sound of a duration 100 ms and 0 represents a silence of duration 100 ms. After 5 minutes, if the oven has not been switched off, the oven alarm can match a second sequence of " 1 0 1 0 1 0 0 1 0 1 0 1 0 0 1 0 1 0 1 0 0 0 0 0". In this example, the generation module 20 can extract two sequences and the detection apparatus 10 will generate a first event "oven alarm 1, cooking done" when the acoustic signature matches the oven alarm and the sound matches the first sequence; the detection apparatus 10 will generate a second event " oven alarm 2, cooking done 5 minutes ago" when the acoustic signature matches the oven alarm and the sound matches the second sequence.

Advantageously, the generation module 20 also analyses the audio levels of the recorded audio samples in order to deduce if the new sound's volume decreases or increases in time. For instance, the volume may be characterized by the following parameters :
- its level which may take one of these values : very loud, loud, medium, low, very low;
- its evolution which may take one of these values : increasing fast, increasing slow, stable, decreasing slow, decreasing fast.

Advantageously, audio samples of the same sound recorded by several microphones, preferably located at different locations in the environment, may be used for the analysis of the audio levels.

Thus, at the end of step 34, the detection apparatus 10 has obtained a combination of features, comprising the fingerprint, the rhythm and the volume, of the new sound.

At step 36, the detection apparatus 10 associates the combination of features of the new sound obtained at step 34 to at least one event. The event may be identified using a learning algorithm, for example a neural network algorithm. In order to validate the result of the identification, the detection apparatus 10 may request a confirmation from the user of the smart home system. Such confirmation request may be sent to the user's smartphone and displayed by said smartphone.

Alternatively, the event associated to the new sound may be directly provided by the user. For example, in this case, the new sound is played back on the user's smartphone speakers and the user is asked to enter a description of the associated event.

For example, let's consider a new sound recorded with the microphone of Bob's smartphone. This new sound is characterized by a specific rhythm, and its fingerprint matches Bob's shoes on a wood surface. At step 36, the detection apparatus 10, for instance Bob's smarphone, asks if Bob is walking in the stairs. If so, a new event "Bob is walking in the stairs" is identified on the basis of the combination of the fingerprint and the rhythm. A more accurate event may also be identified based, for instance, on the fading recorded from another microphone in the house, for example Alice's smartphone microphone. After analysis of this fading at step 34, the detection apparatus 10 asks, at step 36, if Bob is walking up the stairs. If so, a more accurate event "Bob is walking up the stairs" is identified.

At step 38, the detection apparatus 10 transmits to the controller 4 the combination of features of the new sound with the associated event. The controller 4 stores these information in the database.

At step 40, a test is performed to check if a new sound should be recorded, for example through asking the user if he wishes to add a new sound. If it is the case, the process returns to step 32, otherwise the process returns to the idle state 30.

In an alternative embodiment to the learning phase process of Figure 3, a database of fingerprint-event pairs may be available on a web site. For example, the user, after having bought a new product, for example a door bell, could enter a code or a product reference or a product description on the manufacturer web site in order to automatically get a predetermined fingerprint associated with the bought product and an associated event description.

Advantageously, steps 34 to 38 could be implemented by the controller 4, rather than by the detection apparatus 10. In this case, the detection apparatus 10 sends the audio samples of the recorded sound to the controller 4 through a wireless link 13. Then, the controller 4, using its processor 5, implements steps 34 to 38.

The flowchart of Figure 4 details the steps for detecting an event using the built database according to an embodiment of the invention.

Firstly, the system 2 is in an idle state 42.

At a first step 44, a sound is recorded, preferably in the form of at least two audio samples taken during two succeeding periods of time, by a microphone 12 associated to a detection apparatus 10. The recording could be started at the user's initiative or it may be automatically started periodically or started when a motion is detected, for example by an accelerometer within the system 2.

At step 46, the generation module 20 of the detection apparatus 10 computes the acoustic signature of the recorded sound.

At step 48, the generation module 20 extracts the rhythm of the sound on the basis of the recorded audio samples. At step 50, the generation module 20 also analyses the audio levels of the recorded audio samples in order to deduce if the new sound's volume decreases or increases in time.

Advantageously, audio samples of the same sound recorded by several microphones may be used for the analysis of the audio levels.

At step 52, the comparison module 22 of the detection apparatus 10 compares the computed acoustic signature with the acoustic signatures stored in the database.

At step 54, the comparison module 22 compares the extracted rhythm with the rhythms stored in the data base.

At step 56, the comparison module 22 compares the volume with the volumes stored in the data base.

Based on the comparison results of steps 46, 48, 50, it is tested, at step 58, if a combination of at least two of the computed features in steps 46, 48, 50 match with a combination of features stored within the database.

If there's no matching with any combination in the database, the process returns to the idle state 42.

If a combination having the computed features is found in the database, the detection apparatus 10 detects, at step 60, the event as the stored event associated with the found combination.

For example, let's consider a sound recorded with the microphone of Bob's smartphone. The signature, rhythm and volume of the recorded audio samples of said sound are computed. It is assumed that the computed fingerprints match 'Bob's shoes on wood surface' and the computed rhythm matches 'Bob walking in the stairs'. As two features match with a combination in the database, the detection module 24 detects the corresponding event. As the process is still running, a fading recorded from another microphone in the house, such as Alice's smartphone microphone, matches 'walking up the stairs'. Therefore a more accurate event : 'Bob is walking up the stairs' is detected.

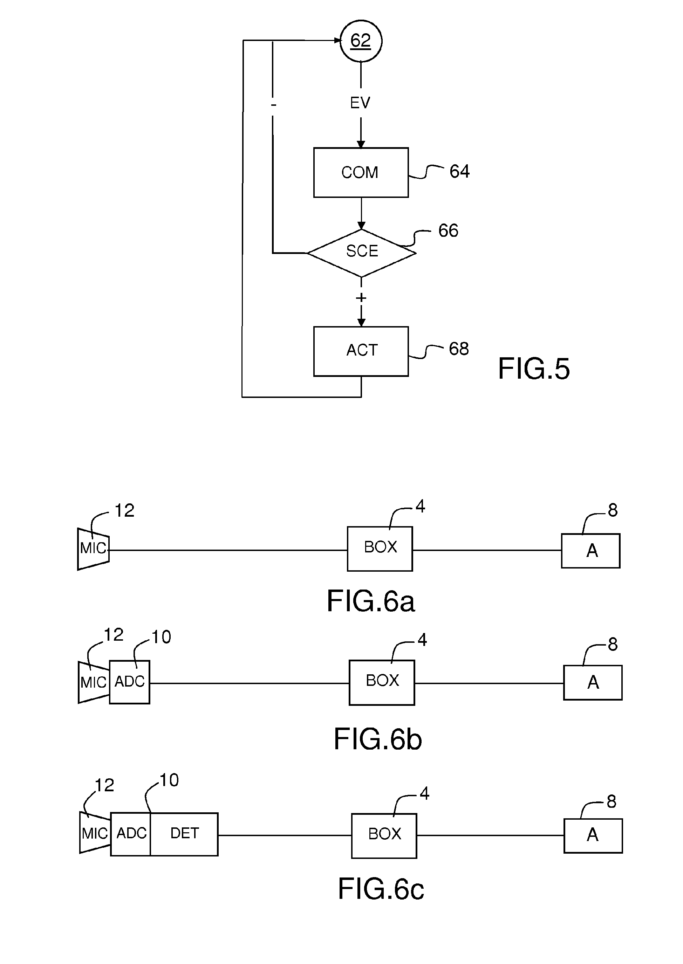

Advantageously, steps 46 to 60 could be implemented by the controller 4, rather than by the detection apparatus 10. In this case, the detection apparatus 10 sends the audio samples of the recorded sound(s) to the controller 4 through a wireless link 13. Then, the controller 4, using its processor 5, implements steps 46 to 60. The flowchart of Figure 5 details the use of the detected event by the controller 4 to trigger an action.

Firstly, the controller 4 is in an idle state 62.

At step 64, the controller 4 receives from the detection apparatus 10 a notification that a new event associated to a combination of audio features has been detected.

At step 66, the controller 4 looks if the detected event corresponds to a predefined or adaptive scenario in the smart home system 2.

For instance, a predefined scenario can be, when the event is someone is in the corridor, then switch on the light, or when the event is the door bell rings and the video is playing on TV, then pause the video.

For instance, an adaptive scenario may be created by learning the user's actions. For example, when the event is the door bell rings, if the user does the same action several times, the system will learn and do it automatically.

If there's no scenario corresponding to the detected event, the process returns to the idle state 62.

If a scenario is found, the controller 4 triggers at step 68 at least one action corresponding to said scenario, by ordering to at least one actuator 8 to perform the action.

According to a first example, if the detected event is a door bell, if the user is watching a movie, a triggered action may be to pause the movie, using a timeshift, and to switch on the living room lights.

According to a second example, if the detected event is "bob walking down the stairs", a triggered action may be to switch on the entrance light.

According to a third example, if the detected event is "oven timer sound" and "no other sound in the kitchen", a triggered action may be to notify Bob by sending him an alarm or a Short Message Service (SMS).

According to a fourth example, if the detected event is "Alice phone ringing" and radio is on, a triggered action may be to reduce the radio volume.

Alternative embodiments of the invention are illustrated in Figures 6-a to 6-c.

In Figure 6-a, a microphone 12 is directly attached to the controller 4, i.e. the detection apparatus is here implemented within the controller 4. The controller 4 is able to digitize recorded sounds by the microphone 12, compute sound features and compare with features in the database. The controller 4 can use the detected event, identified by its sound features, in a scenario. For example, it may trigger a switch on a light. In an alternative, the controller 4 can use the event detection in order to emulate a standard sensor, like Zigbee or Z-Wave sensor for example, and emulate a status change of the sensor. For example, it can emulate a presence detector.

In Figure 6-b, a microphone 12 of a detection apparatus 10 captures sounds. The detection apparatus 10 digitizes the captured sounds using analog-digital converter (ADC), then sends the digitized audio samples to the controller 4 that implements the event detection using the received audio samples.

In Figure 6-c, it is a detection apparatus 10, comprising a microphone 12 and additional processing unit and network interface, that captures, digitizes sounds and detects the event. Then, this detection apparatus 10 acts as a standard sensor, like Zigbee or Z-Wave for example, and emulates a status change. For example, the detection apparatus 10 can emulate a presence detector.

Additionally, the detection apparatus 10 can have a database in its internal memory. The database can be updated by the controller 4 through the network or pre-loaded. The detection apparatus 10 can detect multiple events, therefore it can emulate multiple sensors.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

For instance, even if, in the above description, one sound was recorded by the detection apparatus and at least two features of said sound were used for the detection of an event, it is possible to record a plurality, i.e. at least two, sounds and to perform the event detection on the basis of one feature of each sound, for example the signature of each sound.

Besides, further to triggering actions, the present invention may be advantageously used in a large panel of applications.

For example, the invention may be used to assist hearing-impaired people. When a sound is identified by the system of the invention, a triggered action may be to notify the user with a flash light or on a display, for instance a TV, a smartphone or a tablet, in the home.

The invention can also be extended to out of home scenarios.

For example, the system of the invention may detect "home residents' car arriving" with a microphone that captures outdoor sounds.

According to another example, the system of the invention, using sounds recorded by the microphone of Alice's smartphone, may detect 'Alice's car door closed' or 'Alice's car engine starts'. It then triggers an action consisting, for example, in switching Alice's smartphone to driving mode.

Furthermore, the detection system of the invention may take advantage of supplementary conventional sensors. For instance, some detectors, such as motion sensors for example, may be used to trigger a recording of sounds by a detection apparatus. For example, in order to speed up the door bell sound detection wake-up, an IR detector located outside the home at the front door and initially connected to the home network could be added advantageously. As the IR will detect somebody arrival prior the door bell will sound, the sound detection can be notified to the detection apparatus by the IR device that it has to wake up and be prepared to listen to a short coming door bell sound. This solution permits to save energy or resources of the overall smart home system. Obviously, this solution could be extended to IR detectors suitably located inside the home as well.

## Claims

1. Method of detection of an event in an environment, comprising the steps of :
a) recording (44) at least one sound in said environment ;
b) generating (46, 48, 50) a combination of at least two features from said at least one recorded sound ;
c) comparing (52, 54, 56) said generated combination with at least one stored combination within a database ; and
d) detecting (60) an event on the basis of the comparison result.

2. Method of claim 1, wherein only one sound is recorded and the combination comprises a signature of said recorded sound and at least one feature chosen from the rhythm or the volume of the recorded sound.

3. Method of claim 1, wherein at least two sounds are recorded and the combination comprises signatures of said recorded sounds.

4. Method of any of claims 1 to 3, wherein the detected event is used to trigger an action.

5. Apparatus (10) of detection of an event in an environment, comprising:
a) a generation module (20) for generating a combination of at least two features from at least one sound ;
b) a comparison module (22) for comparing said generated combination with at least one stored combination within a database ; and
c) a detection module (24) for detecting an event on the basis of the comparison result.

6. Apparatus of claim 5, wherein said apparatus (10) is a smartphone.

7. Apparatus of claim 5, wherein said apparatus (10) is a set-top box or a gateway.

8. System (2) comprising at least one apparatus (10) of detection according to any of claims 5 to 7 and a controller (4) connected to said apparatus, said controller (4) being adapted for triggering an action on the basis of the detected event.

9. System of claim 8, wherein the apparatus (10) of detection and the controller (4) are integrated in a same device.

10. Computer-readable program comprising computer-executable instructions to enable a computer to perform the method of any of claims 1 to 4.
